Europäisches Patentamt

European Patent Office

Office européen des brevets

(19)

(11) **EP 0 860 939 A1**

(12) **EUROPÄISCHE PATENTANMELDUNG**

(43) Veröffentlichungstag:
26.08.1998 Patentblatt 1998/35

(51) Int. Cl.⁶: **H02P 21/00**

(21) Anmeldenummer: 97111029.1

(22) Anmeldetag: 02.07.1997

(84) Benannte Vertragsstaaten:
**AT BE CH DE DK ES FI FR GB GR IE IT LI LU MC NL PT SE**

(30) Priorität: 20.02.1997 DE 19706799

(71) Anmelder:
**Vectron Elektronik GmbH
47807 Krefeld (DE)**

(72) Erfinder:
• **Jiang, Jinsheng, Dipl.Ing.
Universität Wuppertal, 42097 Wuppertal (DE)**
• **Holtz, Joachim, Prof.Dr.-Ing.
42119 Wuppertal (DE)**

(74) Vertreter:
**Hoffmann, Eckart, Dipl.-Ing.
Patentanwalt,
Bahnhofstrasse 103
82166 Gräfelfing (DE)**

(54) **Verfahren und Vorrichtung zur geberlosen Rotorlagemessung bei Asynchronmaschinen mit Kurzschlussläufer**

(57) Beschrieben wird ein Verfahren zur Bestimmung der inkrementellen Rotorlage einer über einen Wechselrichter (2) betriebenen dreiphasigen Asynchronmaschine (M), das bei handelsüblichen Maschinen in jedem Betriebszustand der Maschine unter Einschluß des Stillstands einsetzbar ist. Der Wechselrichter nimmt unter der Steuerung durch einen Pulsweitenmodulator (1) nacheinander verschiedene von mehreren möglichen aktiven, je durch einen Schaltzustandszeiger ($u_1$ - $u_6$) eindeutig beschreibbaren Schaltzuständen an. Beim Auftreten wenigstens eines ausgewählten der möglichen aktiven Schaltzustände wird jeweils ein Tastwert ($u_{nk}$) der Summe der Strangspannungen ($u_a$, $u_b$, $u_c$) der Maschine als eine von den totalen Streuinduktivitäten ($L_{\sigma a}$, $L_{\sigma b}$, $L_{\sigma c}$) ihrer Statorwicklung abhängige Größe gemessen. Die inkrementelle Rotorlage kann dann aus dem Meßwert ($u_{na}$, $u_{nb}$, $u_{nc}$) und seiner bekannten Abhängigkeit von der Rotorlage errechnet werden.

Fig. 5

**Beschreibung**

Für den Einsatz in drehzahl- und lagegeregelten Antrieben tragen Asynchronmaschinen üblicherweise einen auf der Welle montierten Lagegeber. Aus dem Gebersignal können die Istwerte der Lage und der Drehgeschwindigkeit zum Zwecke der Regelung abgeleitet werden. Zur Vermeidung der mit solch einem Geber verbundenen Kosten und Zuverlässigkeitseinbußen hat man Verfahren entwickelt, die die Messung der Lage und der Drehgeschwindigkeit auch ohne Einsatz eines Gebers erlauben, wie in den nachstehenden Druckschriften offenbart:

[1] D.S. Zinger, F. Profumo, T.A. Lipo und D.W. Novotny, "*A Direct Field-Oriented Controller for Induction Motor Drives Using Tapped Stator Windings*", <u>IEEE Transactions on Power Electronics, 1990, S. 446-453.</u>

[2] M. Schroedl und P. Weinmeier, "*Sensorless Control of Reluctance Machines at Arbitrary Operating Conditions including Standstill*", <u>IEEE Transactions on Power Electronics, 1994, S. 225-231.</u>

[3] P.L. Jansen und R.D. Lorenz, "*Transducerless Position and Velocity Estimation in Induction and Salient AC Machines*", <u>IEEE Transactions on Industry Applications, Vol. 31, No. 2, S. 240-247, 1995.</u>

Das Verfahren [1] wertet die in jeder Asynchronmaschine auftretende Modulation der magnetischen Leitfähigkeit des Luftspalts durch die Rotornuten aus. Durch diese Modulation werden bei Drehung des Rotors in den Statorwicklungen Spannungen induziert, die näherungsweise die Frequenz $(N_r + 1)\omega$ besitzen, wobei $N_r$ die Zahl der Rotornuten und $\omega$ die Drehfrequenz des Rotors ist. In der Regel bilden die von der modulierten Feldwelle rotatorisch induzierten Spannungen ein Nullsystem und verzerren daher die Rotorströme nicht. Sie werden kontinuierlich gemessen und zur Bestimmung von Lage und Drehzahl verwendet. Weil die Amplituden der induzierten Spannungen mit der Drehfrequenz abnehmen, ist das Verfahren unterhalb etwa 3% der Bemessungsfrequenz nicht mehr einsetzbar.

Das Verfahren [2] nutzt die örtliche Veränderung des magnetischen Leitwerts für den Hauptfluß der Maschine durch den Effekt der Eisensättigung aus. Die Anwendung ist beschränkt auf solche Maschinen, bei denen die Sättigung der Eisenwege genügend ausgeprägte Veränderungen der Maschineneigenschaften bewirken. Für Normmotoren trifft dies in der Regel nicht zu. In jedem Fall ist die Anwendung im Feldschwächbereich nicht möglich.

Alternativ kann gemäß Verfahren [3] eine örtliche Veränderung des magnetischen Leitwerts auch durch eine besondere Konstruktion des Rotors erreicht werden. Hierzu werden beispielsweise längs des Rotorumfangs die Schlitzweiten der Rotornuten oder die Füllhöhe der Nuten mit Leitermaterial verändert. Dadurch wird der Rotor magnetisch oder elektrisch unsymmetrisch. Die Unsymmetrie wird durch ein höherfrequent (500 Hz - 2 kHz) umlaufendes Zusatzdrehfeld abgetastet und zum Zwecke der Erfassung von Lage und Drehfrequenz ausgewertet. Nachteilig ist hier die Notwendigkeit, eine speziell konstruierte Maschine einzusetzen, weiterhin die durch das Zusatzdrehfeld erzeugten Stromverzerrungen und Verluste. Die erreichbare Ortsauflösung und die Genauigkeit der Lagemessung sind gering.

Die bekannten Verfahren gestatten es nicht, die Rotorlage bei einem beliebigen Normmotor zu bestimmen. Ein weiterer Nachteil aller bekannten Verfahren ist die grobe Diskretisierung des ermittelten Lagesignals. Eine Rotorumdrehung wird im besten Fall durch eine Anzahl von Inkrementen dargestellt, die der Zahl der Rotornuten gleich ist. Daher ist es auch nicht möglich, die Rotorlage und die Drehfrequenz im Bereich geringer Drehfrequenz zu erfassen.

Aufgabe der Erfindung ist es, die genannten Nachteile des Standes der Technik zu beseitigen und ein Verfahren sowie eine Vorrichtung zu schaffen, die eine geberlose Lage- und Drehfrequenzerfassung an serienmäßigen Normmotoren, die an einem mittels eines Pulsweitenmodulators gesteuerten Wechselrichter betrieben werden, mit hoher Lageauflösung bei jeder Drehfrequenz einschließlich des Stillstands zu ermöglichen.

Diese Aufgabe wird durch ein Verfahren gemäß Patentanspruch 1 bzw. eine Vorrichtung gemäß Patentanspruch 12 gelöst. Vorteilhafte Ausgestaltungen und Weiterbildungen der Erfindung sind in den Unteransprüchen gekennzeichnet.

Die Erfindung nutzt die Abhängigkeit der totalen Streuinduktivitäten der Statorwicklung der Maschine von der Rotorlage, wie sie auch bei handelsüblichen Normmotoren auftritt. Wenn eine von den totalen Streuinduktivitäten der Statorwicklung abhängige Größe gemessen werden kann, läßt sich die Rotorlage aus der bekannten Abhängigkeit der totalen Streuinduktivitäten von der Rotorlage berechnen. Es hat sich gezeigt, daß die unter bestimmten Voraussetzungen gemessene Summe der Strangspannungen, d.h. die Nullspannung, eine solche von den totalen Streuinduktivitäten der Statorwicklung abhängige Größe darstellt. Aus der Veränderung der Rotorlage ist nachfolgend auch die Drehfrequenz zu bestimmen.

Anders als bei der kontinuierlichen Messung der rotatorisch induzierten Nullspannung nach dem Verfahren [1] wird die Nullspannung erfindungsgemäß nur kurzzeitig abgetastet, wobei es wesentlich ist, daß Maschine zuvor durch einen ausgewählten Schaltzustand in einen definierten transienten Zustand versetzt wird, dessen zeitliche Änderung während der kurzen Tastzeit von den totalen Steuinduktivitäten und von dem jeweiligen Schaltzustand bestimmt ist. Die Messung der Einflusses der totalen Steuinduktivitäten auf die Nullspannung, die nur während transienter Zustände möglich ist, kann bei jeder Drehfrequenz des Rotors einschließlich des Stillstands durchgeführt werden. Die rotatorisch induzierte Nullspannung verschwindet dagegen bei geringer Drehfrequenz und im Stillstand, wodurch das Verfahren [1] dann kein Ergebnis liefert.

Die Erfindung wird nachfolgend anhand von Ausführungsbeispielen unter Bezugnahme auf die Zeichnungen näher erläutert. Es zeigen:

Fig. 1    eine vereinfachte Darstellung zur Erläuterung der Abhängigkeit der totalen Streuinduktivität von der Rotorlage,

Fig. 2    die totalen Streuinduktivitäten (a) und die Differenzen der Nullspannungstastwerte (b) jeweils in Abhängigkeit von der Rotorlage $\delta$,

Fig. 3    ein Diagramm der Schaltzustandszeiger,

Fig. 4    Ersatzschaltbilder für zwei verschiedene Schaltzustände,

Fig. 5    ein Funktionsblockdiagramm eines Ausführungsbeispiels eines ersten Teiles einer Vorrichtung gemäß der Erfindung,

Fig. 6    ein Funktionsblockdiagramm eines anderen Ausführungsbeispiels des ersten Teiles einer Vorrichtung gemäß der Erfindung, und

Fig. 7    ein Funktionsblockdiagramm eines Ausführungsbeispiels des zweiten Teils der Vorrichtung, der für die beiden Ausführungsbeispiele der Fig. 5 und 6 gleich ist.

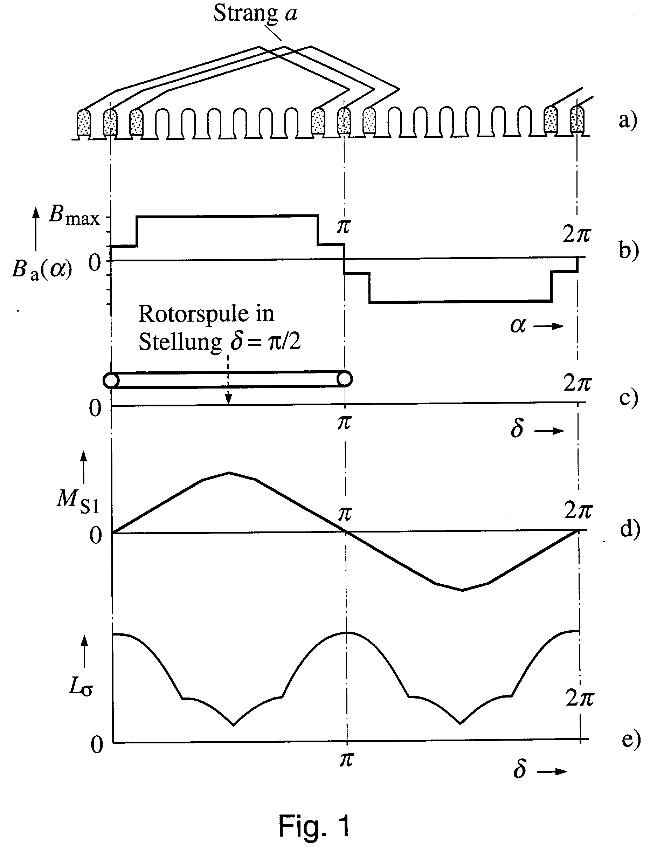

Anhand von Fig. 1 soll zunächst das Prinzip des erfindungsgemäßen Verfahrens unter Bezug auf eine vereinfachte Ausführung des Rotors mit nur zwei Rotorstäben erläutert werden. Die Rotorstäbe bilden eine einzelne Windung (Fig. 1c), die nach dem Prinzip des Kurzschlußläufers kurzgeschlossen ist. Im dreiphasig gewickelten Stator wird zunächst nur der Wicklungsstrang a betrachtet (Fig. 1a). Die totale Streuinduktivität des Strangs a bestimmt sich in bekannter Weise zu

$$L\sigma = L_s(1 - M_{s1}^{\ 2}/L_s L_1) \tag{1}$$

Hierin ist $L_s$ die Induktivität des Statorstrangs a, $L_1$ die Induktivität der Rotorwindung, und $M_{s1}$ die rotorlageabhängige Gegeninduktivität beider Wicklungen. Fig. 1b zeigt die Komponente des Luftspaltflusses $B(\propto)$ als Funktion der Umfangskoordinate $\alpha$ im Bereich eines Polpaars. Die Gegeninduktivität $M_{s1}$ ist durch die Verkettung der Rotorwindung mit dieser Flußkomponente definiert; sie läßt sich in der gezeigten Art durch Integration aus der Verteilung $B(\alpha)$ ermitteln. Fig. 1d zeigt die Abhängigkeit der resultierenden totalen Streuinduktivität $L_\sigma$ von der Rotorlage $\delta$ nach Gleichung (1).

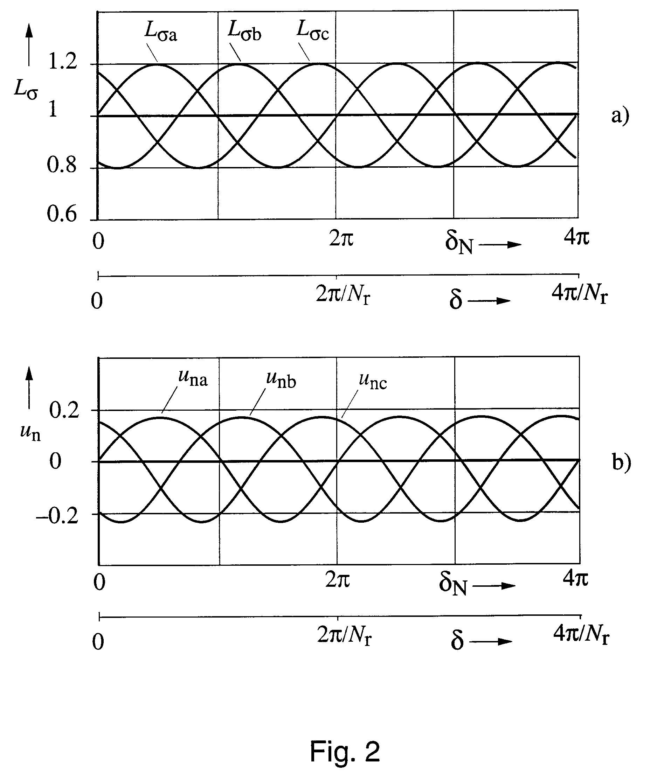

Im allgemeinen Fall besitzt der Rotor $N_r$ Rotorstäbe. Die totalen Streuinduktivitäten $L_{\sigma a}$, $L_{\sigma b}$ und $L_{\sigma c}$ der drei Statorwicklungsstränge a, b und c werden dann ähnlich wie in Gleichung (1) durch quadratische Funktionen der Gegeninduktivitäten zwischen allen Rotorstäben und den Statorsträngen beschrieben. Die totalen Streuinduktivitäten sind in Abhängigkeit der Rotorlage $\delta$ in Fig. 2a aufgetragen. Wegen der endlichen Nutbreiten in Stator und Rotor und unter dem Einfluß von Nutenschrägungen sind die an einer ausgeführten Maschine meßbaren Verläufe so verschliffen, daß sich die in der Zeichnung dargestellten genähert sinusförmigen Verläufe ergeben. Die Kurven sind gegeneinander jeweils um eine Drittelperiode, bezogen auf den Winkelabstand $2\pi/N_r$ zweier Rotornuten, verschoben.

Die Erfindung eignet sich für den Einsatz bei Asynchronmaschinen in Regelantrieben, die von einem dreiphasigen, pulsweitenmodulierten Wechselrichter mit eingeprägter Gleichspannung (typisch 500 V) gespeist werden. Zur weiteren Erläuterung werde ohne Einschränkung der Allgemeinheit die Pulsweitenmodulation in bekannter Weise mit Hilfe von Raumzeigern beschrieben (siehe hierzu: J. Holtz, "*Pulswidth Modulation for Electronic Power Conversion*", <u>Proceedings of the IEEE, Vol. 82, No. 8, S. 1194-1213, 1995</u>). Der Raumzeiger der Statorspannung bestimmt sich danach durch die Definitionsgleichung zu

$$u_s = 2/3 (u_a + a u_b + a^2 u_c) \tag{2}$$

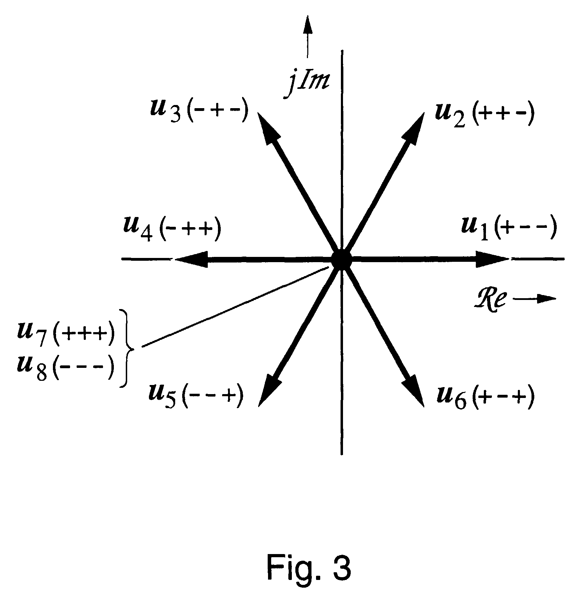

in der die Werte $u_a$, $u_b$ und $u_c$ die jeweiligen Spannungspotentiale an den Maschinenklemmen darstellen. Es gilt $a = \exp(j2\pi/3)$. Die Spannungspotentiale können in Abhängigkeit vom Schaltzustand des Wechselrichters nur die beiden Werte $U_d/2$ oder $-U_d/2$ annehmen. In der komplexen Ebene bildet sich der jeweilige Schaltzustand des Wechselrichters nach Fig. 3 durch acht diskrete Schaltzustandszeiger $u_1$ bis $u_8$ ab. Jeweils nebengestellt in Klammern sind die zugehörigen Spannungszustände an den drei Maschinenklemmen: beispielsweise bedeutet $u_1$ (+ - -), daß das Potential $u_a$ den Wert $U_d/2$ besitzt und die Potentiale $u_b$ und $u_c$ jeweils den Wert - $U_d/2$. Der Kurzschlußzustand $u_s = 0$ ist redundant durch die als Nullzeiger bezeichneten Schaltzustandszeiger $u_7$ ( + + +) und $u_8$(- - -) einstellbar. Die acht Schaltzustandszeiger $u_1$ bis $u_8$ repräsentieren also sechs aktive Schaltzustände und zwei Kurzschluß- oder Nullzustände (da die Schaltzustandszeiger praktisch eine Beschreibung der Schaltzustände (und damit der Ausgangsspannungen des Wechselrichters) darstellen werden die Bezugszeichen $u_k$ ($1 \leq k \leq 8$) nachfolgend für beide benutzt).

In einer ersten Ausführungsform des erfindungsgemäßen Verfahrens (nachfolgend als "erstes Verfahren" bezeichnet) wird der Umstand genutzt, daß bei reduzierter Drehfrequenz auch die Grundschwingungsspannungen an den Maschinenklemmen reduziert sind. Die Pulsweitenmodulation bewirkt dies dadurch, daß die Maschine zeitabschnittsweise durch den Wechselrichter dreisträngig kurzgeschlossen wird. Der Kurzschlußzustand dauert anteilig umso länger, je geringer die Drehfrequenz ist.

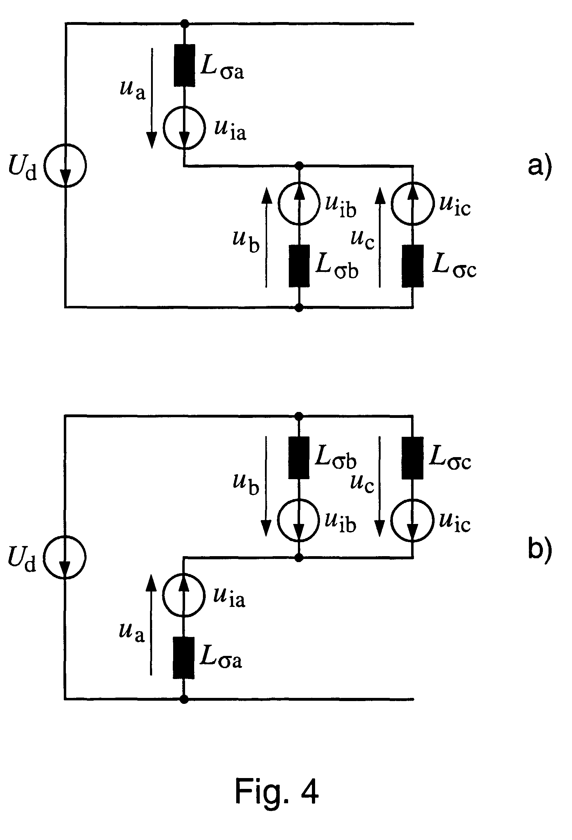

Es wird nun ein Kurzschlußzustand, der für die Zeitdauer $t_k$ bestehen soll, ganz oder zum Teil durch die zeitliche Aufeinanderfolge zweier aktiver Schaltzustände ersetzt. Es wird also zum Zwecke der Messung in die vom Pulsweitenmodulator vorgegebene betriebsmäßige Schaltzustandsfolge eingegriffen. Dabei ist die Maschine beispielsweise im ersten Schaltzustand $u_1$ (+ - -) entsprechend Fig. 4a und im zweiten Schaltzustand $u_4$(- + +) entsprechend Fig. 4b mit der Gleichspannung $U_d$ verbunden.

Die beiden aktiven Schaltzustände sind so gewählt, daß die komplexe Summe der sie repräsentierenden Schaltzustandszeiger gerade den Wert Null ergibt. Wenn also jeder dieser Schaltzustände für die gleiche Dauer besteht, bewirken sie die gleiche Stromänderung in den drei Maschinensträngen, die auch aufgetreten wäre, wenn der Kurzschlußzustand nicht ganz oder zum Teil durch zwei aktive Schaltzustände ersetzt worden wäre. Das Modulationsgesetz für die Grundschwingung der Maschinenströme wird folglich nicht gestört. Die Dauer, für die jeder der beiden Schaltzustände besteht ist maximal $t_k/2$ und minimal gleich einer Mindestdauer $t_m$, die für eine Messung der Nullspannung im jeweiligen Schaltzustand mindestens erforderlich ist.

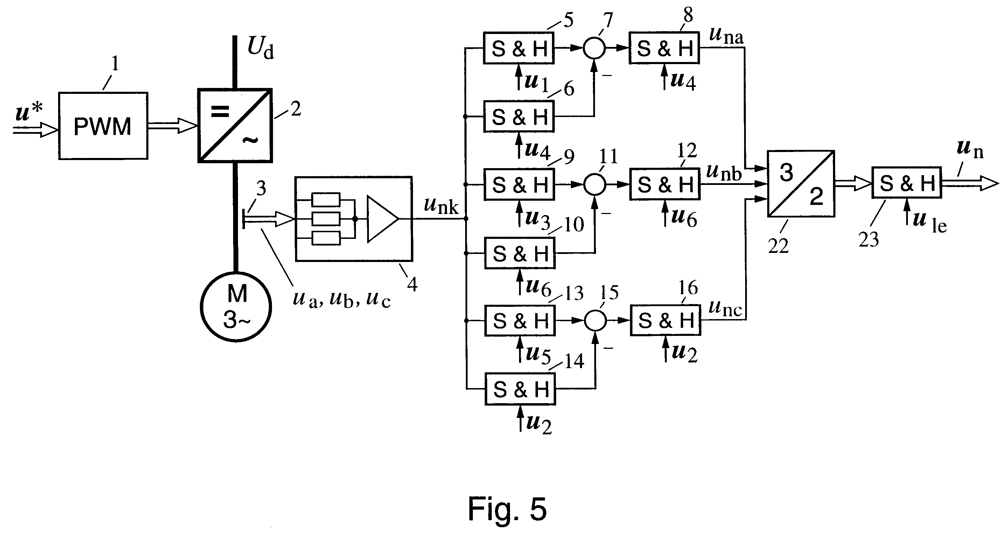

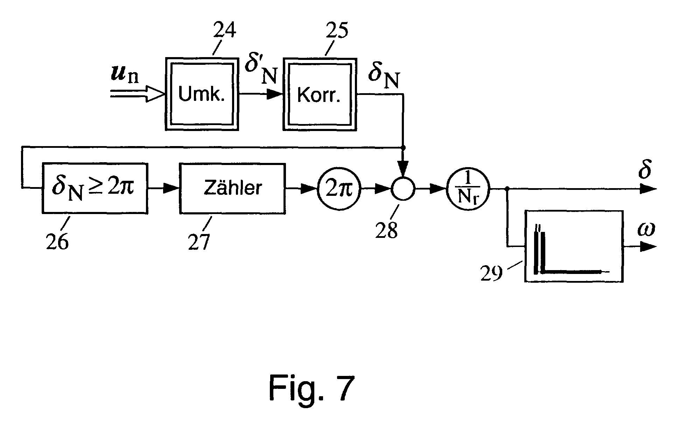

Die Rotorlage soll zunächst im Winkelbereich $\delta_N$ einer Nutteilung des Rotors bestimmt werden. Die Fig. 5 und 7 zeigen in Form von Funktionsblockdiagrammen ein Ausführungsbeispiel einer hierfür geeigneten Vorrichtung. Darin bezeichnet 1 einen von einem als Raumzeiger ausgebildeten Spannungssollwert gesteuerten Pulsweitenmodulator, der einen Wechselrichter 2 so ansteuert, daß dieser eine Folge von Schaltzuständen uk annimmt. Die Eingangsklemmen des Wechselrichters 2 sind mit einer nicht dargestellten Gleichstromquelle der Spannung $U_d$ verbunden, seine Ausgangsklemmen mit der Asynchronmaschine M. In einem Summierglied 4 wird während der vorgenannten ausgewählten aktiven Schaltzustände des Wechselrichters jeweils die Nullkomponente (Nullspannung)

$$u_{nk} = u_a + u_b + u_c \tag{3}$$

aus den meßbaren drei Strangspannungen $u_a$, $u_b$ und $u_c$ gebildet. Im ersten aktiven Schaltzustand $u_k$, (k = 1), stellt sich die zugehörige Nullspannung $u_{n1}$ auf den Wert

$$u_{n1} = U_d (L_{\sigma a}L_{\sigma b} + L_{\sigma a}L_{\sigma c} - 2L_{\sigma b}L_{\sigma c}) + u_{zus}(L_{\sigma a}, L_{\sigma b}, L_{\sigma c}, u_{ia}, u_{ib}, u_{ic}) \tag{4}$$

ein. Hierin ist $u_{zus}$ eine Zusatzspannung, die für das Meßergebnis ohne Bedeutung ist. Der Tastwert dieser Nullspannung wird im Halteglied 5 gespeichert, das durch ein mit dem Schaltzustand $u_1$ synchrones Abtastsignal aktiviert wird. (Der Einfachheit halber sind in den Figuren die Abtastsignale jeweils mit der derselben Bezeichnung versehen wie der zugehörige Schaltzustand. Die Erzeugung dieser Abtastsignale ist auf eine den Fachleuten ohne weiteres ersichtliche Weise möglich und soll hier nicht näher dargelegt werden.) Während des zweiten aktiven Zustands $u_k$ (k = 4) wird das Halteglied 6 durch ein mit dem Schaltzustand $u_4$ synchrones Abtastsignal aktiviert. Der Tastwert bildet sich wiederum entsprechend Gleichung (4), wobei sich aber das Vorzeichen von $U_d$ ändert.

Subtrahiert man nun den Tastwert der Nullspannung des jeweilig ersten Schaltzustands von demjenigen des zugehörigen zweiten Schaltzustands, so heben sich die Zusatzspannungen $u_{zus}$ in den jeweiligen Ausdrücken (4) heraus, und man erhält man als Meßwert

$$u_{na}(\delta_N) = 2U_d (L_{\sigma a}L_{\sigma b} + L_{\sigma a}L_{\sigma c} - 2L_{\sigma b}L_{\sigma c}). \tag{5}$$

Dieser Wert wird in einem Summierglied 7 gebildet und während des Zustands $u_4$ mittels eines entsprechenden Abtastsignals im Halteglied 8 gespeichert. Die Bezeichnung $u_{na}(\delta_N)$ zeigt an, daß die beteiligten aktiven Schaltzustandszeiger $u_1$ und $u_4$ in Richtung der Strangachse a orientiert sind. Der Verlauf der Kurve $u_{na}(\delta_N)$ nach Gleichung (5) ist in Fig. 2b dargestellt.

Alternativ läßt sich ein Kurzschlußzustand der Dauer $t_k$ (ganz oder zum Teil) auch durch die beiden aktiven Schaltzustände $u_3$ und $u_6$ ersetzen, deren Schaltzustandszeiger nach Fig. 3 jeweils um 120° voreilend gegenüber den

Zustandszeigern $u_1$ und $u_4$ verdreht sind. Man erhält dann bei einer Auswertung über die Elemente 9 - 12 entsprechend Gleichung (5) die Kurve $u_{nb}(\delta_N)$ in Fig. 2b. Schließlich erhält man bei Verwendung der aktiven Schaltzustände $u_5$ und $u_2$ mittels der Elemente 13 - 16 die Kurve $u_{nc}(\delta_N)$. Voraussetzung ist dabei immer, daß die verwendeten aktiven Schaltzustände jeweils für dieselbe Zeitdauer herrschen.

Wie aus Fig. 2b ersichtlich, reflektiert jede der Meßwertkurven für $u_{na}$, $u_{nb}$ und $u_{nc}$ die Rotorlage im Bereich einer Nutteilung. Für die einfachste Ausführungsform der Erfindung reicht daher einer der in Fig. 5 dargestellten Meßkanäle, die von den Elementen 5 bis 8, 9 bis 12 bzw. 13 bis 16 gebildet werden. Wird nämlich vorausgesetzt, daß die Maschine sich nur in einer Drehrichtung bewegen kann, so reicht eine der Meßwertkurven $u_{na}$, $u_{nb}$, $u_{nc}$ für die Bestimmung der Rotorlage aus. Bei wechselnder Drehrichtung sind allerdings mindestens zwei der Meßkanäle erforderlich. Ein dritter Meßkanal ist zur Erhöhung der Genauigkeit vorteilhaft.

Bei Verwendung von zwei oder drei Meßkanälen liegt ein vollständiger Meßwertesatz immer erst beim Einschalten des jeweils letzten Schaltzustands $u_{le}$ eines Meßzyklus vor. Nimmt man beispielsweise an, daß die oberen beiden Meßkanäle in Fig. 5 verwendet werden, ist der letzte Schaltzustand $u_{le}$ der Schaltzustand $u_6$. Nimmt man an, daß alle drei Meßkanäle in Fig. 5 verwendet werden, ist dies der Schaltzustand $u_2$. In jedem Fall aktiviert ein mit dem letzten Schaltzustand $u_{le}$ synchrones Abtastsignal ein Halteglied 23, welches das Ausgangssignal eines Transformationsglieds 22 speichert.

Bei Verwendung von zwei Meßkanälen geschieht die Transformation im Transformationsglied 22 nach der Vorschrift

$$u_n = (u_{na} + j(u_{na} + 2\,u_{nb})/\sqrt{3}) \tag{6}$$

Bei Verwendung von drei Meßkanälen wird die Transformation entsprechend Gleichung (2') ausgeführt:

$$u_n = 2/3\,(u_{na} + au_{nb} + a^2 u_{nc}). \tag{2'}$$

Das Ergebnis ist in beiden Fällen ein Drehzeiger $u_n$. Es bedarf keiner Erwähnung, daß das Transformationsglied 22 und das nachgeschaltete Halteglied 23 entfallen, wenn nur ein Meßkanal benutzt wird.

Bevor die Ableitung der inkrementellen Rotorlage aus dem Drehzeiger $u_n$ beschrieben wird, soll erst eine zweite Ausführungsform des erfindungsgemäßen Verfahrens (nachfolgend als "zweites Verfahren" bezeichnet) erläutert werden.

Das erste Verfahren ist anwendbar, wenn der Wechselrichter betriebsmäßig (d.h. als Folge des Modulationsgesetzes und ohne die Berücksichtigung der erfindungsgemäßen Messung) vom Pulsweitenmodulator in einen Kurzschlußzustand versetzt werden soll, der dann aber für den Zweck der Messung durch zwei aktive Schaltzustände ersetzt wird. Das zweite Verfahren ist dagegen dann anwendbar, wenn der Wechselrichter betriebsmäßig vom Pulsweitenmodulator in einen aktiven Schaltzustand, also nicht in einen Kurzschlußzustand versetzt wird. Das Verfahren beruht nicht wie das erste Verfahren auf einer Differenzbildung. Daher geht die Zusatzspannung $u_{zus}$ aus Gleichung (4) mit in das Meßergebnis ein und erzeugt einen, wenngleich geringen, Fehler.

Ähnlich wie beim ersten Verfahren kann die zur Bestimmung der Rotorlage erforderliche Messung der Nullspannung auch beim zweiten Verfahren während nur eines Schaltzustands, während zweier Schaltzustände oder während dreier Schaltzustände erfolgen. Während beim ersten Verfahren jeweils zwei Messungen während eines, zweier oder dreier Schaltzustandspaare erfolgen, sieht das zweite Verfahren jeweils nur eine Messung während eines, zweier oder dreier Schaltzustände vor. Dabei müssen im Fall der Messung bei mehreren Schaltzuständen die den Schaltzuständen entsprechenden Schaltzustandszeiger jeweils um 60° gegeneinander verdreht sein, sie brauchen aber nicht unbedingt in unmittelbarer zeitlicher Aufeinanderfolge aufzutreten. Der Pulsweitenmodulator steuert betriebsmäßig in unmittelbarer zeitlicher Folge stets zwei nebeneinanderliegende (also um 60° gegeneinander verdrehte) aktive Zeiger an, die als Hauptzeiger nachfolgend mit $u_{h1}$ und $u_{h2}$ bezeichnet werden. Mögliche Kombinationen von Hauptzeigern sind in der untenstehenden Tabelle zusammengefaßt. Die entsprechenden betriebsmäßig auftretenden Schaltzustände können daher zur Messung herangezogen werden. Wenn die Messung bei drei Schaltzuständen erfolgen soll, bedarf es eines dritten Zeigers, der entweder zu $u_{h1}$ oder $u_{h2}$ benachbart liegt. Der Pulsweitenmodulator kann im Rahmen der betriebsmäßigen Steuerung in unmittelbarer zeitlicher Folge oder in geringem zeitlichen Abstand nach anderen Zeigern einen diese Bedingung erfüllenden dritten aktiven Zeiger ansteuern. Dies muß aber nicht so sein. Wenn nicht zu erwarten ist, daß der für die Messung benötigte dritte Zeiger innerhalb eines angemessenen Zeitintervalls nach den beiden Hauptzeigern betriebsmäßig angesteuert wird, sieht die Erfindung vor, ihn bedarfsweise nach den beiden Hauptzeigern für eine kurze Zeitdauer ($\geq t_m$) als Zusatzzeiger $u_z$ einzuschalten. Wenn ein solcher Zusatzzeiger zum Zwecke der Messung eingeschaltet wird, muß er nach erfolgter Messung durch das Einfügen von einem oder mehreren Schaltzuständen in seiner Wirkung aufgehoben werden. Die einzufügenden Schaltzustände und ihre jeweilige Dauer werden aus dem Modulationsgesetz des Pulsweitenmodulators abgeleitet. Ob es sich bei dem dritten Zeiger um den "künstlichen" Zusatzzeiger oder einen vom Pulsweitenmodulator ohnehin vorgegebenen Zeiger handelt, ist für die eigentliche Messung bedeutungslos, da die Zeiger in beiden Fällen identisch sind. Soweit also die nachfolgenden Ausführungen auf den Zusatzzeiger Bezug nehmen, gelten sie in gleicher Weise für den vom Pulsweitenmodulator ohnehin vorgegebenen dritten Zeiger, der einen Zusatzzeiger überflüssig macht. Die den Hauptzeigern zuzuordnenden Zusatzzeiger sind in der Tabelle angegeben.

Tabelle

| $u_{h1}$ | $u_{h2}$ | $u_{le}$ |
|---|---|---|
| $u_1$ | $u_2$ | $u_3 \vee u_6$ |
| $u_2$ | $u_3$ | $u_1 \vee u_4$ |
| $u_3$ | $u_4$ | $u_2 \vee u_5$ |
| $u_4$ | $u_5$ | $u_3 \vee u_6$ |
| $u_5$ | $u_6$ | $u_1 \vee u_4$ |
| $u_6$ | $u_1$ | $u_2 \vee u_5$ |

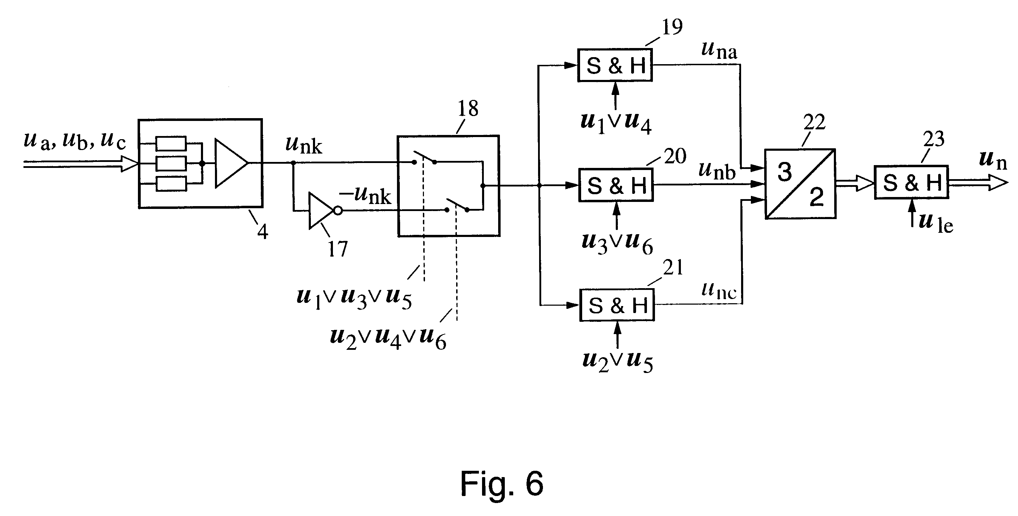

Fig. 6 zeigt ein Beispiel einer für die Durchführung des zweiten Verfahrens geeigneten Vorrichtung. In den Fig. 5 und 6 sind gleiche Elemente mit denselben Bezugszeichen versehen. Der Pulsweitenmodulator 1, der Wechselrichter 2 und die Asynchronmaschine M sind der Einfachheit halber in Fig. 6 weggelassen. Die im Summierglied 4 gebildete Nullspannung $u_{nk}$ wird über ein Schaltglied 18 während der Schaltzustände $u_1$, $u_3$ oder $u_5$ direkt, und während der Schaltzustände $u_2$, $u_4$ oder $u_6$ über einen Invertierer 17 auf die Eingänge von drei Haltegliedern 19, 20 und 21 gegeben. Das Halteglied 19 wird beim Auftreten einer der Schaltzustände $u_1$ oder $u_4$ aktiviert und liefert dann das Ausgangssignal $u_{na}$. Das Halteglied 20 wird beim Auftreten einer der Schaltzustände $u_3$ oder $u_6$ aktiviert und liefert dann das Ausgangssignal $u_{nb}$. Das Halteglied 21 wird beim Auftreten einer der Schaltzustände $u_2$ oder $u_5$ aktiviert und liefert dann das Ausgangssignal $u_{nc}$.

Wie schon erwähnt, können im Rahmen der Erfindung auch bei dem zweiten Verfahren alle drei in Fig. 6 gezeigten Meßkanäle, nur zwei von ihnen oder nur einer verwendet werden. Ein vollständiger Wertesatz liegt beim Einschalten des jeweils letzten Zeigers $u_{le}$ vor. Bei Verwendung nur eines Meßkanals ist der letze Zeiger der Hauptzeiger $u_{h1}$, bei Verwendung von zwei Meßkanälen ist dies der zweite Hauptzeiger $u_{h2}$, und bei Verwendung von drei Meßkanälen ist dies der Zusatzzeiger $u_z$. Ein mit dem letzten Zeiger $u_{le}$ synchrones Abtastsignal aktiviert dann das Halteglied 23, welches wie bei dem Ausführungsbeispiel gemäß Fig. 5 die vom Transformationsglied 22 entsprechend Gleichung (2') beziehungsweise Gleichung (6) zu einem Drehzeiger $u_n$ zusammengesetzten Signale $u_{na}$ und $u_{nb}$ beziehungsweise $u_{na}$, $u_{nb}$ und $u_{nc}$ speichert.

In Fig. 7 wird erläutert, wie die inkrementelle Rotorlage $\delta$ aus dem Drehzeiger $u_n$ abgeleitet wird, wie er entweder mit der Vorrichtung nach Fig. 5 oder derjenigen nach Fig. 6 gewonnen wird. Zunächst wird vorzugsweise bei der Verwendung von zwei (oder drei) Meßkanälen zur Erhöhung der Genauigkeit der Lageerfassung bei der Bestimmung des zweiten (und dritten) Meßwerts (jeweils) die Zeitdifferenz erfaßt, um die die Bestimmung des ersten Meßwerts zurückliegt. Mit dieser Zeitdifferenz wird die aus dem ersten (und zweiten) Meßwert bestimmte Rotorlage mit Hilfe der aus den Messungen bekannten Drehfrequenz auf den Zeitpunkt der letzten Messung umgerechnet. Das Transformationsglied 22 und das nachgeschaltete Halteglied 23 entfallen, wenn nur ein Meßkanal benutzt wird.

Nachfolgend wird die Winkellage $\delta_{N'}$ im Bereich einer Rotornutteilung des Rotors mit Hilfe der Umkehrfunktion 24 berechnet.

Wegen der aus Gleichung (1) ersehbaren quadratischen Abhängigkeit der totalen Streuinduktivitäten von den Gegeninduktivitäten $M_{sx}$ stellen die gemessenen Kurven (Fig. 2b) keine einfrequenten harmonischen Schwingungen dar. Im Detail hängt ihre Form vor allem von der Anzahl und von den Abmessungen der Rotornuten ab und ist daher immer maschinenspezifisch. Zur Erzielung einer höheren Genauigkeit kann die Form zunächst während eines Testlaufs der Maschine mit konstanter Drehfrequenz gemessen und in einer Korrekturtabelle 25 abgelegt werden. Mit Hilfe dieser Korrekturtabelle kann die fehlerbehaftete Winkellage $\delta_N'$ in die genaue Winkellage $\delta_N$ überführt werden. Bei weniger hohen Genauigkeitsanforderungen kann auf die Korrekturtabelle verzichtet werden. Das korrigierte Signal $\delta_N$ repräsentiert die genaue Rotorlage im Bereich einer Rotornutteilung.

Bei Verwendung nur eines Meßkanals ist Umkehrfunktion 24 die Arkussinusfunktion. Bei Verwendung von zwei oder drei Meßkanälen bilden die zusammengesetzten Signale $u_{na}$ und $u_{nb}$ beziehungsweise $u_{na}$, $u_{nb}$ und $u_{nc}$ einem Drehzeiger $u_n$, aus dessen Komponenten die Winkellage $\delta_{N'}$ mit Hilfe der als Arkustangensfunktion ausgebildeten Umkehrfunktion 24 berechnet wird,

Nach Ablauf einer Periode des Signals $\delta_N$ wird durch die Bedingung 26, die als Vergleicher realisierbar ist, ein

Modulo-$N_r$-Zähler 27 mit dem Inhalt $Z_\delta$ um ein Inkrement weitergeschaltet. Der Inhalt $Z_\delta$ des Zählers 27 nimmt also periodisch die Werte 0 bis $N_r$ - 1 an, die im Multiplizierer 30 mit $2\pi$ multipliziert werden. Das Rotorlagesignale $\delta$ im Bereich einer vollen Umdrehung des Rotors wird durch ein Summierglied 28 gemäß

$$\delta = (2\pi Z_\delta + \delta_N)/N_r \qquad (7)$$

gebildet. Nachfolgend wird durch einen Differenzierer 29 die Drehfrequenz gemäß $\omega = d\delta/dt$ aus dem Rotorlagesignal $\delta$ abgeleitet. Für viele Anwendungen interessiert nur die Drehfrequenz. Diese kann schon aus der (korrigierten oder nicht korrigierten) Winkellage im Bereich einer Rotornutteilung bestimmt werden. In solchen Fällen können die Elemente 26, 27, 28 und 30 in Fig. 7 entfallen.

Die Drehrichtung des Rotors ist mit der Drehrichtung des Drehzeigers $u_n$

$$\text{sign}(d\delta_N/dt) \qquad (8)$$

identisch.

Bei der praktischen Ausführung ist zur Abtastung der Nullspannung eine Mindestzeit $t_m$ der Größenordnung 10 μs erforderlich. Es kann sein, daß die vom Pulsweitenmodulator vorgegebene Zeitdauer des jeweilig benutzten Schaltzustandszeigers (einschließlich eines Nullzeigers beim ersten Verfahren) kleiner ist als für eine sichere Messung der Nullspannung durch Signalabtastung mindestens erforderlich wäre. In einem solchen Falle wird der Schaltzustandszeiger unterdrückt und seine Dauer gespeichert. Bei einem nächsten Auftreten des gleichen Zustandszeigers wird festgestellt, ob die nun vorgegebene Zustandsdauer, vermehrt um den früheren Speicherwert, für die Abtastung des Meßwerts ausreicht. Ist dies nicht der Fall, so wird die Zustandsdauer zum vorigen Speicherwert addiert und das Ergebnis gespeichert. Dieser Vorgang wird so lange wiederholt, bis die erreichte Gesamtzustandsdauer für die Abtastung der Meßspannung ausreicht. Insgesamt wird dadurch das Modulationsgesetz nicht verletzt, wenngleich eine Erhöhung der Stromverzerrung in Kauf genommen werden muß.

Die beschriebenen Meßverfahren ergänzen einander nun so, daß das erste Verfahren, das die Abtastung der Nullkomponente während des Nullzustands des Wechselrichters vornimmt, vorzugsweise dann eingesetzt wird, wenn die Zeitdauer der Nullzustände des Wechselrichters größer ist als diejenige der aktiven Zeiger; dies ist bei niedriger Drehfrequenz der Fall. Beim zweiten Verfahren wird die Nullkomponente während eines aktiven Schaltzustands abgetastet. Daher ist dieses Verfahren vorteilhaft, wenn die Zeitdauer der aktiven Zeiger größer ist als diejenige der Nullzeiger; dies ist bei höherer Drehfrequenz der Fall. Je nach Einsatzfall, kann das eine oder das andere Verfahren eingesetzt werden. Es ist aber auch möglich, zwischen beiden Verfahren abhängig vom Betriebszustand der Asynchronmaschine umzuschalten.

Es ist hervorzuheben, daß die erfindungsgemäße Messung der inkrementellen Rotorlage an keinerlei Voraussetzungen bezüglich des Zustands der Maschine gebunden ist. Die Maschine kann magnetisch erregt oder unerregt sein; der Rotor kann sich drehen oder im Stillstand befinden; und es können betriebliche Ströme in Stator oder Rotor fließen oder nicht. Die gute Auflösung des Meßverfahrens wird von diesen Zuständen nicht beeinflußt.

**Patentansprüche**

1. Verfahren zur Bestimmung der inkrementellen Rotorlage einer über einen Wechselrichter (2) betriebenen dreiphasigen Asynchronmaschine (M), wobei der Wechselrichter unter der Steuerung durch einen Pulsweitenmodulator (1) nacheinander verschiedene von mehreren möglichen aktiven, je durch einen Schaltzustandszeiger ($u_1$ - $u_6$) eindeutig beschreibbaren Schaltzuständen annimmt, **dadurch gekennzeichnet,** daß während eines ausgewählten der möglichen Schaltzustände ein Tastwert ($u_{nk}$) der Summe der Strangspannungen ($u_a$, $u_b$, $u_c$) als eine von den totalen Streuinduktivitäten ($L_{\sigma a}$, $L_{\sigma b}$, $L_{\sigma c}$) der Statorwicklung abhängige Größe gemessen wird und die inkrementelle Rotorlage aus dem Meßwert ($u_{na}$, $u_{nb}$, $u_{nc}$) und seiner bekannten Abhängigkeit von der Rotorlage errechnet wird.

2. Verfahren nach Anspruch 1, **dadurch gekennzeichnet,** daß die Drehfrequenz durch Differentiation eines sich aus wiederholten Messungen und Berechnungen ergebenden Rotorlagesignals ($\delta$, $\delta_N$) bestimmt wird.

3. Verfahren nach Anspruch 1 oder 2, **dadurch gekennzeichnet,** daß zwei oder drei verschiedene Schaltzustände ausgewählt werden, für jeden der ausgewählten Schaltzustände ein zugehöriger Meßwert ($u_{na}$, $u_{nb}$, $u_{nc}$) mit einer jeweiligen Messungen ermittelt wird und die Rotorlage aus der Kombination der zwei oder drei Meßwerte errechnet wird, wobei die den ausgewählten Schaltzuständen entsprechenden Schaltzustandszeiger jeweils um 60° gegeneinander verdreht sind, so daß die zwei bzw. drei Meßwerte ein zwei- bzw. dreiphasiges Drehsystem bilden und die Meßwerte zu einem Drehzeiger ($u_n$) des Drehsystems kombiniert werden.

4. Verfahren nach Anspruch 3, **dadurch gekennzeichnet,** daß drei verschiedene Schaltzustände ausgewählt werden, von denen betriebsmäßig unmittelbar aufeinanderfolgen, während der dritte Schaltzustand für den Zweck der Messung zusätzlich zur normalen Schaltzustandsfolge nach dem zweiten Schaltzustand eingeschaltet wird und in seiner Wirkung nachfolgend durch einen oder mehrere weitere zusätzliche Schaltzustände kompensiert wird.

5. Verfahren nach Anspruch 1 oder 2, **dadurch gekennzeichnet,** daß ein betriebsmäßig auftretender Nullzustand, bei dem die Asynchronmaschine dreisträngig kurzgeschlossen wird, in seiner ganzen oder einem Teil seiner Dauer durch ein aktives Schaltzustandspaar ersetzt wird, welches von zwei nacheinander für jeweils gleiche Dauer hervorgerufene, sich in ihrer Wirkung aufhebende aktive Schaltzustände gebildet wird, und daß die Messung gesondert für jeden dieser beiden Schaltzustände des Schaltzustandspaares erfolgt und die Meßwertdifferenz des so erhaltenen Meßwertpaares als die von den totalen Streuinduktivitäten der Statorwicklung abhängige Größe gebildet wird.

6. Verfahren nach Anspruch 5, **dadurch gekennzeichnet,** daß zwei oder drei betriebsmäßig nacheinander auftretende Nullzustände jeweils durch ein aktives Schaltzustandspaar ersetzt werden, daß für jedes der zwei oder drei Schaltzustandspaare die Meßwertdifferenz aus den mittels einer jeweiligen Messung gewonnenen Meßwertpaaren gebildet wird und die inkrementelle Rotorlage aus der Kombination der zwei oder drei Meßwertdifferenzen berechnet wird, wobei die den Schaltzustandspaaren entsprechenden Schaltzustandszeigerpaare jeweils um 60° gegeneinander verdreht sind, so daß die zwei bzw. drei Meßwertdifferenzen ein zwei- bzw. dreiphasiges Drehsystem bilden und die Meßwertdifferenzen zu einem Drehzeiger ($u_n$) des Drehsystems kombiniert werden.

7. Verfahren nach Anspruch 3, 4 oder 6, dadurch gekennzeichnet, daß im Fall zweier oder dreier Messungen zum Erhalt von zwei oder drei Meßwerten oder Meßwertdifferenzen die Zeitspanne zwischen dem Zeitpunkt der letzten Messung und dem Zeitpunkt der einen oder der beiden vorangehenden Messungen erfaßt wird und die Rotorlage, die sich aus der oder den vorangehenden Messungen ergibt mit Hilfe der aus den Messungen bekannten Drehfrequenz auf den Zeitpunkt der letzten der zwei oder drei Messungen umgerechnet wird.

8. Verfahren nach einem der Ansprüche 3, 4, 6 oder 7, **dadurch gekennzeichnet,** daß die Rotorlage ($\delta_N$) im Bereich einer Rotornutteilung aus dem Winkel arg($u_n$) des Drehzeigers ($u_n$) errechnet wird und daß nach jeder vollen Periode der Rotorlage ($\delta_N$) im Bereich einer Rotornutteilung ein Modulo-$N_r$-Zähler (26) weitergeschaltet wird, wobei $N_r$ die Zahl der Rotornuten ist, und daß die inkrementelle Rotorlage im Bereich einer Umdrehung aus der Summe des Zählerstands und der Rotorlage ($\delta_N$) im Bereich einer Rotornutteilung ermittelt wird.

9. Verfahren nach Anspruch 8, **dadurch gekennzeichnet,** daß die Rotorlage ($\delta_N$) im Bereich einer Rotornutteilung aus dem Winkel arg($u_n$) des Drehzeigers ($u_n$) errechnet wird und mit Hilfe einer Korrekturtabelle (25) korrigiert wird, wobei der Inhalt der Korrekturtabelle (25) aus Meßwerten errechnet wird, die bei einem vorherigen Testlauf der Maschine bei konstanter Drehfrequenz erfaßt wurden.

10. Verfahren nach einem der vorhergehenden Ansprüche, **gekennzeichnet** durch folgende Schritte:

   (a) Vergleichen der vom Pulsweitenmodulator (1) vorgegebenen Dauer eines für die Messung ausgewählten Schaltzustands mit einer für die Messung erforderlichen Mindestdauer,
   (b) Durchführen der Messung, wenn Schritt (a) ergibt, daß die Dauer gleich der Mindestdauer oder größer als diese ist, sowie andernfalls
   (c1) Unterdrücken des entsprechenden Schaltzustands und Speichern der für den unterdrückten Schaltzustands eigentlich vorgegebenen Dauer,
   (c2) Warten, bis der Pulsweitenmodulator (1) denselben Schaltzustand erneut vorgibt,
   (c3) Vergleichen der Summendauer aus der vom Pulsweitenmodulator vorgegebenen Dauer des erneut vorgegebenen Schaltzustands und der gespeicherten Dauer mit der Mindestdauer,
   (c4) wenn Schritt (c3) ergibt, daß die Summendauer gleich der Mindestdauer größer als diese ist, Einschalten des Schaltzustands für die Summendauer und Durchführen der Messung, sowie andernfalls
   (c5) erneutes Unterdrücken des Schaltzustands, Speichern der Summendauer und Wiederholen der Schritte (c2) bis (c5) bis in Schritt (c4) die akkumulierte Summendauer gleich der Mindestdauer oder größer als diese ist.

11. Verfahren nach Anspruch 10 in Verbindung mit Anspruch 5 oder 6, **dadurch gekennzeichnet,** daß die für die Messung erforderliche Mindestdauer das Doppelte der zur Messung eines Tastwerts ($u_{nk}$) benötigten Dauer beträgt.

**12.** Vorrichtung zur Durchführung des Verfahrens nach Anspruch einem der vorhergehenden Ansprüche, umfassend:

einen Pulsweitenmodulator (1),

einen eingangsseitig an eine Gleichstromquelle und ausgangsseitig an die Asynchronmaschine (M) angeschlossenen Wechselrichter (2), dessen Steuereingänge mit Ausgängen des Pulsweitenmodulator (1) verbunden sind und der mittels jeweiliger Steuersignale vom Pulsweitenmodulator (1) nacheinander in jeweils einen einer vorgegebenen Anzahl von Schaltzuständen versetzbar ist,

eine Meßeinrichtung (3, 4) zur Messung der Strangspannungen ($u_a$, $u_b$, $u_c$) der Asynchronmaschine und zur Bildung der Summe der Strangspannungen,

eine Abtastsignal-Generatoreinrichtung zur Erzeugung wenigstens eines mit einem ausgewählten der Schaltzustände synchronen Abtastsignals,

eine erste Halte-Einrichtung (19-21), deren Eingang mit dem Ausgang der Meßeinrichtung (3, 4) verbunden ist und die von dem Abtastsignal triggerbar ist, um einen Tastwert ($u_{nk}$) der Summe der Strangspannungen zu halten, und

eine Recheneinrichtung zur Errechnung der Rotorlage anhand des in der Halte-Einrichtung (5, 6, 9, 10, 13, 14; 19-21) gehaltenen Tastwerts.

**13.** Vorrichtung nach Anspruch 12, bei der die möglichen Schaltzustände aktive Schaltzustände und Nullzustände, bei denen die Asynchronmaschine dreisträngig kurzgeschlossen wird, umfassen und die ferner aufweist:

eine Erfassungseinrichtung zur Erfassung, daß der Pulsweitenmodulator (1) im Begriff ist, einem Nullzustand des Wechselrichters (2) entsprechende Steuersignale auszugeben,

eine auf die Erfassungseinrichtung ansprechende Steuer-Einrichtung zur Steuerung des Wechselrichters nacheinander für jeweils gleiche Dauer in zwei aktive, sich in ihrer Wirkung aufhebende Schaltzustände eines ersten Paares der möglichen Schaltzustände,

eine Abtastsignal-Generatoreinrichtung zur Erzeugung eines ersten Abtastsignal-Paares von zwei mit den Schaltzuständen des ausgewählten Schaltzustand-Paares jeweils synchronen Abtastsignalen,

ein erstes Paar Halte-Einrichtungen mit einer ersten und einer zweiten Halte-Einrichtung (5, 6; 9, 10; 13, 14), deren Eingänge mit dem Ausgang der Meßeinrichtung (3, 4) verbunden sind und die jeweils von einem der Abtastsignale des ersten Abtastsignal-Paares triggerbar sind, um einen jeweiligen Tastwert ($u_{nk}$) der Summe der Strangspannungen zu halten,

ein erstes Summierglied (7; 11; 15) zur Bildung der Differenz zwischen den beiden in den Halte-Einrichtungen des ersten Halte-Einrichtung-Paares gehaltenen Tastwerten, und

eine erste weitere Halte-Einrichtung (8; 12; 16), deren Eingang mit dem Ausgang des ersten Summierglieds verbunden ist und die vom späteren der beiden Abtastsignale des ersten Abtastsignal-Paares triggerbar ist, um die Tastwertdifferenz zu halten,

wobei die Recheneinrichtung das Ausgangssignal der weiteren Halte-Einrichtung erhält.

**14.** Vorrichtung nach Anspruch 13, bei der

die Steuer-Einrichtung den Wechselrichter bei jedem von zwei oder drei in zeitlicher Folge auftretenden Nullzuständen nacheinander für jeweils gleiche Dauer in zwei aktive, sich in ihrer Wirkung aufhebende Schaltzustände eines jeweiligen Paares der möglichen Schaltzustände steuert, und

die Abtastsignal-Generatoreinrichtung zwei oder drei Abtastsignal-Paare von mit den beiden Schaltzuständen des jeweiligen Schaltzustand-Paares jeweils synchronen Abtastsignalen erzeugt, und die ferner umfaßt:

zwei oder drei Paare Halte-Einrichtungen mit jeweils einer ersten und einer zweiten Halte-Einrichtung (5, 6; 9, 10; 13, 14), deren Eingänge mit dem Ausgang der Meßeinrichtung (3, 4) verbunden sind und die jeweils von einem der Abtastsignale eines jeweiligen der zwei oder drei Abtastsignal-Paare triggerbar sind, um einen jeweiligen Tastwert ($u_{nk}$) der Summe der Strangspannungen zu halten,

zwei oder drei Summierglieder (7, 11, 15) zur Bildung der Differenz zwischen den beiden in den Abtast-und-Halte-Einrichtungen eines jeweiligen Halte-Einrichtung-Paares gehaltenen Tastwerten,

zwei oder drei weitere Halte-Einrichtungen (8, 12, 16), deren Eingang jeweils mit dem Ausgang eines entsprechenden der Summierglieder (7, 11, 15) verbunden ist und die vom späteren der beiden Abtastsignale eines jeweiligen der Abtastsignal-Paare triggerbar sind, um die jeweilige Tastwertdifferenz ($u_{na}$, $u_{nb}$, $u_{nc}$) zu halten,

eine Transformations-Einrichtung (22) zum Kombinieren der in den zwei oder drei weiteren Halte-Einrichtungen (8, 12, 16) gehaltenen Tastwertdifferenzen zu einem Drehzeiger $u_n$ nach der Formel

$$u_n = (u_{na} + j(u_{na} + 2\,u_{nb})/\sqrt{3})\,,\text{ im Fall von zwei weiteren Halte-Einrichtungen, bzw.}$$

$u_n = 2/3\,(u_{na} + a\,u_{nb} + a^2 u_{nc})$ , im Fall von drei weiteren Halte-Einrichtungen,

wobei $u_{na}$, $u_{nb}$, $u_{nc}$ die von den weiteren Halte-Einrichtungen (8, 12, 16) gehaltenen Signale sind und $a = \exp(j2\pi/3)$ , und

eine Ausgangshalte-Einrichtung (23), deren Eingang mit dem Ausgang der Transformations-Einrichtung (22) verbunden ist und die von dem spätesten der Abtastsignale aller Abtastsignal-Paare triggerbar ist, um das Ausgangssignal der Transformations-Einrichtung (22) zu halten,

wobei die Recheneinrichtung das Ausgangssignal der Ausgangshalte-Einrichtung (23) erhält.

15. Vorrichtung nach einem der Ansprüche 12 bis 14, umfassend:

eine Abtastsignal-Generatoreinrichtung zur Erzeugung von zwei oder drei mit zwei bzw. drei ausgewählten der Schaltzustände synchronen Abtastsignalen,
zwei oder drei erste Halte-Einrichtungen (19-21), die von einem jeweiligen der Abtastsignale triggerbar sind,
eine Schalteinrichtung (18) über die die Eingänge der zwei oder drei ersten Halte-Einrichtungen (19-21) wahlweise direkt oder über und einen Invertierer (17) mit dem Ausgang der Meßeinrichtung (3, 4) verbindbar sind, wobei die Schalteinrichtung abhängig vom jeweiligen Schaltzustand des Wechselrichters (2) umschaltbar ist,
eine Transformations-Einrichtung (22) zum Kombinieren der in den zwei oder drei ersten Halte-Einrichtungen (19 - 21) gehaltenen Tastwerte zu einem Drehzeiger $u_n$ nach der Formel

$u_n = (u_{na} + j(u_{na} + 2\,u_{nb})/\sqrt{3})$ , im Fall von zwei ersten Halte-Einrichtungen, bzw.
$u_n = 2/3\,(u_{na} + a\,u_{nb} + a^2 u_{nc})$ , im Fall von drei ersten Halte-Einrichtungen,

wobei $u_{na}$, $u_{nb}$, $u_{nc}$ die von den ersten Halte-Einrichtungen (8, 12, 16) gehaltenen Signale sind und $a = \exp(j2\pi/3)$ , und
eine Ausgangshalte-Einrichtung (23), deren Eingang mit dem Ausgang der Transformations-Einrichtung (22) verbunden ist und die von dem spätesten der zwei oder drei Abtastsignale triggerbar ist, um das Ausgangssignal der Transformations-Einrichtung (22) zu halten,

wobei die Recheneinrichtung das Ausgangssignal der Ausgangshalte-Einrichtung (23) erhält.

16. Vorrichtung nach einem der Ansprüche 12 bis 15, bei der mit Ausnahme der Meßeinrichtung und des Wechselrichters alle Elemente als ein programmgesteuerter Mikro-Computer ausgebildet sind.

Fig. 1

Fig. 2

Fig. 3

Fig. 4

Fig. 5

$u_n$

23 S & H $\uparrow u_{1e}$

22 3 / 2

$u_{na}$ 19 S & H $u_1 \vee u_4$

$u_{nb}$ 20 S & H $u_3 \vee u_6$

$u_{nc}$ 21 S & H $u_2 \vee u_5$

18

$u_{nk}$

$-u_{nk}$ 17

$u_1 \vee u_3 \vee u_5$

$u_2 \vee u_4 \vee u_6$

4

$u_a, u_b, u_c$

Fig. 6

Fig. 7

**Europäisches Patentamt**

# EUROPÄISCHER RECHERCHENBERICHT

Nummer der Anmeldung

EP 97 11 1029

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | ZINGER D S ET AL: "A DIRECT FIELD-ORIENTED CONTROLLER FOR INDUCTION MOTOR DRIVES USING TAPPED STATOR WINDINGS" IEEE TRANSACTIONS ON POWER ELECTRONICS, Bd. 5, Nr. 4, 1.Oktober 1990, Seiten 446-453, XP000204292 * das ganze Dokument * --- | 1-15 | H02P21/00 |
| D,A | JANSEN P L ET AL: "TRANSDUCERLESS POSITION AND VELOCITY ESTIMATION IN INDUCTION AND SALIENT AC MACHINES" IEEE TRANSACTIONS ON INDUSTRY APPLICATIONS, Bd. 31, Nr. 2, 1.März 1995, Seiten 240-247, XP000513097 * das ganze Dokument * --- | 1-15 | |
| D,A | M. SCHROEDL ET AL: "Sensorless Control of Reluctance Machines at Arbitrary Operating Conditions Including Standstill" IEEETRANSACTIONS ON POWER ELECTRONICS, Bd. 9, Nr. 2, März 1994, Seiten 225-231, XP002065015 * das ganze Dokument * --- | 1-15 | |
| D,A | HOLTZ J: "PULSEWIDTH MODULATION FOR ELECTRONIC POWER CONVERSION" PROCEEDINGS OF THE IEEE, Bd. 82, Nr. 8, 1.August 1994, Seiten 1194-1214, XP000468124 * das ganze Dokument * ----- | 1-15 | |

**RECHERCHIERTE SACHGEBIETE (Int.Cl.6)**

H02P

Der vorliegende Recherchenbericht wurde für alle Patentansprüche erstellt

| Recherchenort | Abschlußdatum der Recherche | Prüfer |
|---|---|---|
| DEN HAAG | 15.Mai 1998 | Beyer, F |

EPO FORM 1503 03.82 (P04C03)